# EUROPEAN PATENT APPLICATION

(11) **EP 4 796 597 A1**
(43) Date of publication of application: **26.08.2026**
(21) Application number: 24879702.9
(22) Date of filing: 15.10.2024
(51) Int. Cl.: C08L 83/07, C08G 75/045, C08K 3/36, C08K 5/3435, C08L 83/08

(54) **ULTRAVIOLET-CURABLE SILICONE GEL COMPOSITION**

(30) Priority: 19.10.2023 JP 2023180391
(71) Applicant: Momentive Performance Materials Japan LLC, Tokyo 107-6119 (JP)
(72) Inventor: SHIMADA, Genichiro, Tokyo 107-6119 (JP); FUJII, Katsuya, Tokyo 107-6119 (JP); MOCHIZUKI, Kikuo, Tokyo 107-6119 (JP)
(74) Representative: Müller-Boré & Partner Patentanwälte PartG mbB
(86) International application number: PCT/JP2024/036696
(87) International publication number: WO 2025/084279

(57) **Abstract**

(A) a polyorganosiloxane containing an aliphatic unsaturated group; (B) a polyorganosiloxane containing a mercaptoalkyl group bonded to a silicon atom; (C) a photoreaction initiator for initiating the reaction of (A) and (B); (D) a hindered amine-based stabilizer; and (E) an ultraviolet curable silicone gel composition containing fine particles having an average particle diameter of 1 to 30 µm and containing silicon-oxygen bonds. The composition provides a cured product having excellent damping properties and excellent long-term stability.

## Description

### TECHNICAL FIELD

The present invention relates to a silicone gel composition having excellent long-term reliability and curable by ultraviolet irradiation.

### BACKGROUND ART

The silicone gel composition comprises at least a polyorganosiloxane and a crosslinking agent, wherein the polyorganosiloxane is crosslinked by the crosslinking agent to form a crosslinked silicone gel. Silicones are used in various forms as resins having flexibility and strength after curing because of the characteristics such as high chemical stability and heat resistance possessed by a silicon oxide skeleton and the possibility of wide molecular design similar to carbon compounds by changing the degree of polymerization and the design of substituents (Patent Document 1). As one mode of use of the silicone gel composition, a composition containing a filler and a light stabilizer in addition to the polyorganosiloxane and the crosslinking agent is used as a vibration suppressing material (damping material) applied to a vibration transmitting part of an optical apparatus such as a camera.

In the application to products such as optical equipment, an ultraviolet-curable resin composition is used as a silicone gel from the viewpoints of curing in a short time and dimensional stability by suppressing curing shrinkage. As an ultraviolet-curable silicone resin composition, an ultraviolet-curable silicone resin composition comprising a polyorganosiloxane containing a mercaptoalkyl group and a polyorganosiloxane containing an aliphatic unsaturated group has been proposed (Patent documents 2 and 3).

For example, a silicone resin composition containing acetophenone and/or propiophenone as a compatibilizer has been proposed in order to homogenize the composition and prevent the formation of unstable portions (Patent Document 4). On the other hand, since an en-thiol type ultraviolet-curable silicone resin such as Patent Documents 2 to 4 causes yellowing, clouding and softening of a cured product upon exposure to ultraviolet light, selection of various additives such as antioxidants has been studied in order to suppress these phenomena and improve storage stability (Patent Documents 5 to 8).

### PRIOR ART DOCUMENTS

### PATENT DOCUMENTS

Patent Document 1: International Publication No. 2022/019229
Patent Document 2: Japanese Patent Application Laid-Open No. 2-245060
Patent Document 3: Japanese Patent Application Laid-Open No. 3-064389
Patent Document 4: Japanese Patent Application Laid-Open No. 2013-253179
Patent Document 5: Japanese Patent Application Laid-Open No. 2016-60782
Patent Document 6: Japanese Patent Application Laid-Open No. 2016-145297
Patent Document 7: Japanese Patent Application Laid-Open No. 2020-172581
Patent Document 8: Japanese Patent Application Laid-Open No. 2023-82381

### SUMMARY OF THE INVENTION

### PROBLEMS TO BE SOLVED BY THE INVENTION

It is useful to add an inorganic filler in order to secure the damping property, but in the case of a polyorganosiloxane composition containing an inorganic filler, there is a problem that a change in properties is observed after curing depending on the kind of filler and the amount of filler, and it is difficult to achieve both the damping property and the long-term reliability.

An object of the present invention is to provide an ultraviolet-curable silicone gel composition which gives a cured product having excellent damping property and excellent long-term reliability.

### MEANS FOR SOLVING THE PROBLEM

The present inventors have made an earnest investigation in order to solve the above problems, and have found that in the ultraviolet-curable silicone gel composition, when a certain kind of silicon fine particles and a specific hindered amine compound are used, both high damping property and long-term reliability can be achieved.

That is, the present invention relates to the following embodiments.
[1] An ultraviolet curable silicone gel composition comprises:
   (A) polyorganosiloxane containing an aliphatic unsaturated group;
   (B) polyorganosiloxane containing a mercaptoalkyl group bonded to a silicon atom;
   (C) photoreaction initiator initiating the reaction of (A) and (B)
   (D) hindered amine stabilizer; and
   (E) fine particles containing silicon-oxygen bonds having an average particle size of 1 to 30 µm.
[2] The ultraviolet curable silicone gel composition of the above [1], wherein the (A) is a polyorganosiloxane in which 1 to 10 mol% of the groups other than aliphatic unsaturated groups that directly bond to silicon are C6 to C12 aryl groups.
[3] The ultraviolet curable silicone gel composition of the above [1] or [2], wherein the (A) comprises: (a1) a linear polyorganosiloxane having at least two aliphatic unsaturated groups in the molecule; and (a2) a linear polyorganosiloxane having an average of one aliphatic unsaturated group in the molecule.
[4] The ultraviolet curable silicone gel composition of the above [3], wherein the (a1) comprises a linear polyorganosiloxane containing an aliphatic unsaturated group represented by following formula (I): 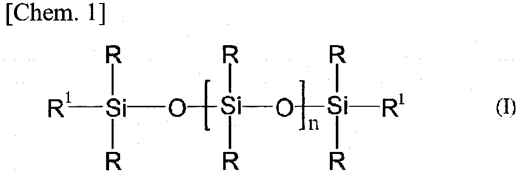 (wherein
   each R¹ is independently an aliphatic unsaturated group;
   each R is independently a C1 to C6 alkyl group or a C6 to C12 aryl group; and n is a number that makes a viscosity at 23°C 100 to 100,000cP.)
[5] The ultraviolet-curable silicone gel composition of any of the above [1] to [4], wherein the ratio of the number of mercaptoalkyl groups in (B) to the aliphatic unsaturated groups in (A) is 0.01 to 10.
[6] The ultraviolet-curable silicone gel composition of any of the above [1] to [5], wherein the (E) is spherical or pulverized fine particles.
[7] The ultraviolet-curable silicone gel composition of any of the above [1] to [6], wherein the (E) is fine particles derived from silicone or silicon dioxide.
[8] The ultraviolet-curable silicone gel composition of any of the above [1] to [7], wherein the amount of the (E) is 0.1 to 40 parts by weight based on a total of 100 parts by weight of the whole composition.
[9] The ultraviolet-curable silicone gel composition of any of the above [1] to [8], further comprising (F) fumed silica.
[10] The ultraviolet curable silicone gel composition of the above [9], wherein, in the total of 100 parts by weight of (A) to (F), the amount of (A) is 41 to 90 parts by weight, the amount of (B) is 0.1 to 3 parts by weight, the amount of (C) is 0.1 to 3 parts by weight, the amount of (D) is 0.1 to 3 parts by weight, the amount of (E) is 0.1 to 40 parts by weight, and the amount of (F) is 1 to 10 parts by weight.
[11] An ultraviolet-curable silicone gel composition according to any one of the above [1] to [10], wherein the value of the complex modulus G* when cured by irradiation with ultraviolet light having a wavelength of 315 to 400 nm at an intensity of 100 mW/cm² for 30 seconds is 4000 Pa or more.
[12] A damping material comprising the ultraviolet curable silicone gel composition according to any one of the above [1] to [11].

### EFFECT OF THE INVENTION

Disclosed is an ultraviolet-curable silicone gel composition giving a cured product which has excellent damping properties and excellent in long-term reliability.

### EMBODIMENTS TO CARRY OUT THE INVENTION

In the present descriptions, the term "alkyl group" refers to a linear or branched monovalent saturated hydrocarbon group. Examples of alkyl groups include, without limitation, methyl, ethyl, propyl, i-propyl, butyl, isobutyl, s-butyl, t-butyl, pentyl, hexyl, heptyl, octyl, nonyl, and the like. When a range of the number of carbon atoms of a substituent is indicated, for example, "C ₁₋₆ alkyl group" or the like, and in this case, the range of the number of carbon atoms is 1 to 6.

In the present invention, the term "alkenyl group" refers to a linear or branched monovalent hydrocarbon group having at least one C=C double bond. Examples of alkenyl groups include, but are not limited to, ethynyl (vinyl), propenyl, butenyl, pentenyl, hexenyl, heptenyl, octenyl, nonenyl, and the like.

In the present invention, the term "aryl group" means a monovalent cyclic aromatic hydrocarbon group consisting of a monocyclic, bicyclic or tricyclic aromatic ring. Examples of aryl groups include, but are not limited to, phenyl, tolyl, xylyl, naphthyl, phenanthryl, fluorenyl, indenyl, pentalenyl, azulenyl, oxydiphenyl, biphenyl, methylenediphenyl, aminodiphenyl, diphenylsulfidyl, diphenylsulfonyl, diphenylisopropylidenyl, benzodioxanyl, benzofuranyl, benzodioxylyl, benzopyranyl, benzoxazinyl, benzopiperazinyl, benzopyrrolidinyl, benzomorpholinyl, methylenedioxyphenyl, ethylenedioxyphenyl, and the like (These partially hydrogenated aromatic derivatives are also included.).

### [(A) Polyorganosiloxane Containing an Aliphatic Unsaturated Group]

The ultraviolet curable silicone gel composition of the present invention contains at least one kind of polyorganosiloxane containing an aliphatic unsaturated group in the molecule as component (A). Component (A) functions as a base polymer of the ultraviolet curable silicone gel composition.

The kind of the aliphatic unsaturated group contained in component (A) is not particularly limited as long as it is a functional group for which a photocuring reaction proceeds and a group having a carbon-carbon double bond and capable of an addition reaction. Specific examples include aliphatic unsaturated groups such as (meth) acrylic groups or alkenyl groups. The carbon number of the alkenyl group is preferably 2 to 20, preferably 2 to 8, and more preferably 2 to 6. The alkenyl group may have a branched structure or a ring structure. The position of the carbon-carbon double bond in the hydrocarbon constituting the alkenyl group may be any position. From the viewpoint of reactivity, the carbon-carbon double bond is preferably located at the terminal of the group. Preferable examples of the alkenyl group include vinyl groups because polyorganosiloxanes can be easily synthesized. The aliphatic unsaturated group may exist at any position of the polyorganosiloxane molecule. For example, it may exist at the terminal of the molecule, or it may exist as a side chain at a site other than the terminal. In the case of a linear polyorganosiloxane, at least one aliphatic unsaturated group preferably exists at both terminals of the molecular main chain of component (A). In the present specification, the molecular main chain of component (A) represents a relatively longest bond chain in the molecule of component (A).

The molecular skeleton of component (A) is not particularly limited as long as the main skeleton is a siloxane bond. A skeleton of a straight chain, a branched chain, a ring or a three-dimensional network may be arbitrarily formed. The siloxane skeleton may be interrupted by a divalent organic group. In the description of the structure of a siloxane compound, the structural units of the siloxane compound may be described by the following abbreviations. Hereinafter, these structural units may be referred to as "M units", "D units" and the like.
M: Si(CH₃)₃O_{1/2}
D: Si(CH₃)₂O_{2/2}
T: Si(CH₃)O_{3/2}
Q: SiO_{4/2}

Hereinafter, in the present descriptions, the siloxane compound is constructed by combining the structural units described above, and may at least partially contain a compound in which the methyl group of the structural unit is replaced by another group such as a halogen like fluorine or a hydrocarbon like a phenyl group. In this case, the D unit replaced by a phenyl group may be expressed as D^{Ph} in order to indicate that the D unit is replaced by a substituent. In addition, for example, when the unit is expressed as D^{Ph}₂₀D₂₀, the expression is intended to contain a total of twenty phenyl groups in forty D units, and does not mean that twenty D^{Ph} units are followed by twenty D units, and each unit may be arranged arbitrarily, and it is understood that the siloxane compound may contain a structural unit expressed as SiPh₂O_{2/2} (expressed as D^{Ph}₂). The siloxane compound may have various three-dimensional structures depending on the T unit or the Q unit, and the component (A) may have a linear molecular skeleton formed by arbitrarily combining the M and D units described above.

The polyorganosiloxane of (A) preferably includes a polyorganosiloxane having two or more aliphatic unsaturated groups as (a1) in order to cure the composition. Such a polyorganosiloxane is not particularly limited as long as it has an average of two or more alkenyl groups bonded to a silicon atom in one molecule and can form a cross-linked structure by addition reaction with the component (B) described later. Such a polyorganosiloxane has at least two alkenyl group-containing siloxane units represented by, for example, (R¹)ₘ(R²)ₙSiO_{(4-m-n)/2} (wherein R¹ is an unsubstituted or substituted monovalent hydrocarbon group having no aliphatic unsaturated bond, and; R² is an alkenyl group; m is an integer of 0 to 2; n is an integer of 1 to 3, where m+n is 1 to 3) in the molecule.

One specific example of the above formula (a1) contains a linear polyorganosiloxane containing an aliphatic unsaturated group represented by formula (I): 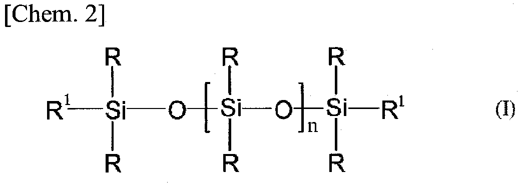 (wherein:
each R¹ is independently an aliphatic unsaturated group;
each R is independently a C1 to C6 alkyl group or a C6 to C12 aryl group, wherein 0 to 40 mol% of R is a C6 to C12 aryl group;
n is a number that makes a viscosity at 23°C 100 to 300,000 cP).

In formula (I), R¹ is an aliphatic unsaturated group. Both terminal R¹ may be the same or different, but preferably the same.

Examples of the aliphatic unsaturated group include an alkenyl group, for example, a C2 to C6 alkenyl group (for example, vinyl, propenyl, butenyl, hexenyl, and the like). An alkenyl group having an unsaturated terminal is more preferable, and a vinyl group is preferable from the viewpoint of ease of synthesis and the like.

In formula (I), R is a C1 to C6 alkyl group (for example, methyl, ethyl, propyl, etc.) or a C6 to C12 aryl group (for example, phenyl, tolyl, xylyl and the like). R may be the same or different.

When R contains a group other than a C1 to C6 alkyl group, 1 to 40 mol% of R is preferably a C6 to C12 aryl group from the viewpoint of adjustment of the refractive index, more preferably 1 to 20 mol% of R is a C6 to C12 aryl group from the viewpoint of viscosity and thixotropy, more preferably 1 to 10 mol% is a C6 to C12 aryl group, and particularly preferably 3 to 7 mol% is a C6 to C12 aryl group.

From the viewpoint of ease of synthesis and the like, methyl is preferable as the C1 to C6 alkyl group, and phenyl is preferable as the C6 to C12 aryl group.

In formula (I), 1 to 40 mol% of R is preferably phenyl and the remainder is methyl, more preferably 1 to 20 mol% of R is phenyl and the remainder is methyl, and particularly preferably 1 to 10 mol% of R is phenyl and the remainder is methyl.

In the polyorganosiloxane (A), a polyorganosiloxane having an average of one aliphatic unsaturated group may be included as (a2). The type of the polyorganosiloxane having an average of one aliphatic unsaturated group in the molecule (a2) is not particularly limited, and may be used regardless of whether the position of the unsaturated group is at the molecular terminal or inside the molecule, as long as the polyorganosiloxane (a2) has an average of one aliphatic unsaturated group. One type of polyorganosiloxane may be used alone, or two or more types of polyorganosiloxanes of different types may be used in combination. A mixture of a plurality of types of polyorganosiloxanes which may be produced in the process of producing the polyorganosiloxane and which have different numbers of aliphatic unsaturated groups may be used as (a2). The polyorganosiloxane (a2) having an average of one alkenyl group may be obtained as a mixture of, for example, about 50 mol% polyorganosiloxane containing an alkenyl group at one terminal, about 25 mol% polyorganosiloxane containing an alkenyl group at both terminals, and about 25 mol% polyorganosiloxane containing no alkenyl group, according to a method known in the art, and may be used as (a2). The type of the aliphatic unsaturated group exemplified by (a1) is applied.

Such (a2) has, for example, an average of 1 alkenyl group-containing siloxane unit represented by (R¹)ₘ(R²)SiO_{(3-m)/2} (wherein R¹ is an unsubstituted or substituted monovalent hydrocarbon group having no aliphatic unsaturated bond, and; R² is an alkenyl group; m is an integer of 0 to 2) in the molecule.

The shape of the siloxane skeleton of the polyorganosiloxane (a2) is not particularly limited. Examples of linear polyorganosiloxanes include linear polyorganosiloxanes containing phenyl group-containing aliphatic unsaturated groups, such as polydimethylsiloxanes containing vinyl groups at one terminal. From the viewpoint of the workability of the composition, such linear polyorganosiloxanes may have a viscosity of 100 to 100,000cP, preferably 100 to 25,000cP at 23°C.

Examples of branched polyorganosiloxanes include M^{Vi}Q resin, MD^{Vi}Q resin, M^{Vi}T resin, M^{Vi}DT resin, MD^{Vi}T resin, and the like. Here, M unit is (CH₃)₃SiO_{1/2} unit, M^{Vi} is (CH₂=CH)(CH₃)₂SiO_{1/2} unit, D is -(CH₃)₂SiO_{2/2} unit, D^{Vi} is - (CH₃)(CH₂=CH)SiO_{2/2} unit, T is (CH₃)SiO_{3/2} unit (3 functionalities), and Q is SiO_{4/2} unit (4 functionalities).

Specifically, branched polyorganosiloxanes comprising SiO_{4/2} unit, R'₃SiO_{1/2} unit, R'2SiO_{2/2} unit, and optionally R'SiO_{3/2} unit (wherein R' each independently represents a C1-C6 alkyl group or an aliphatic unsaturated group), wherein at least one R' is an aliphatic unsaturated group per one molecule can be cited. Among them, branched polyorganosiloxanes having 6 to 10 moles of SiO_{4/2} units and 4 to 8 moles of R'₃SiO_{1/2} units per one mole of R'₂SiO_{2/2} units can be cited. The polyorganosiloxanes containing aliphatic unsaturated groups other than the components (A) are preferably solid or viscous semisolid resinous or liquid at room temperature. Examples include those having a weight-average molecular weight of 1,000 to 400,000, and preferably 2,000 to 200,000. The weight-average molecular weight is a value obtained by using polystyrene as a calibration curve by gel permeation chromatography analysis (GPC).

As the aliphatic unsaturated group related to R', the groups listed as aliphatic unsaturated groups in (A) and preferred groups are applied. The aliphatic unsaturated group R' may exist as any unit of R', but preferably exists as R'₂SiO units or R'₃SiO_{1/2} units.

R' other than the aliphatic unsaturated group is a C1 to C6 alkyl group (for example, methyl, ethyl, propyl, etc.), and a methyl group is preferred in consideration of heat resistance.

Specific examples of the polyorganosiloxane having an average of one curable functional group in the molecule (a2) include a linear polyorganosiloxane having an aliphatic unsaturated group at a molecular terminal represented by the following general formula: 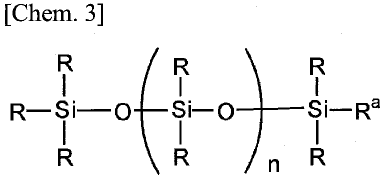 (wherein:
R^{a} is an aliphatic unsaturated group;
R is a C₁₋₆ alkyl group or C₆₋₁₂ aryl group independently;
and n is a number that makes a viscosity at 23°C 10 to 50,000cP)
is exemplified, but is not limited to a resin having such a structure. It is preferable to use a linear siloxane in which Ra is a vinyl group and each R is a methyl group in view of easy availability or preparation.

The number of aliphatic unsaturated groups in component (A) can be determined from the molecular weight obtained by determining the average structural formula by NMR and calculating the molecular weight.

The method for preparing the component (A) is not particularly limited, and can be obtained, for example, by carrying out polycondensation and re-equilibration of chlorosilanes necessary for a desired structure such as dimethyldichlorosilane, diphenyldichlorosilane, methylphenyldichlorosilane, dimethylvinylchlorosilane, or by co-hydrolyzing alkoxysilanes necessary for a desired structure such as dimethyldimethoxysilane, diphenyldimethoxysilane, methylphenyldimethoxysilane, dimethylvinylmethoxysilane, and carrying out polycondensation and re-equilibration reactions. Component (A) can also be obtained by carrying out ring-opening polymerization and re-equilibration of siloxanes necessary for a desired structure, such as 1,1,3,3,5,5,7,7-octamethylcyclotetrasiloxane, 1,1,3,3,5,5,7,7-octaphenylcyclotetrasiloxane, 1,1,3,3-tetramethyl -1, 3-divinyldisiloxane, and the like, in the presence of an alkali catalyst (Alkali metal hydroxide salt, alkali metal silanolate, ammonium hydroxide salt, etc.) or an acid catalyst (Sulfuric acid, silanolate sulfate, trifluoromethanesulfonic acid).

From the viewpoint of workability of the composition, component (A) has a viscosity at 25°C of 100 to 500,000cP, preferably 100 to 250,000cP, more preferably 200 to 10,000cP, and particularly preferably 300 to 300,000cP. In this specification, the viscosity is a value measured at 40rpm and 25°C with a rheometer (MCR302e) (manufactured by Anton Paar) using a cone plate type measuring jig CP25-2.

Component (A) may be used alone or in combination of two or more kinds. When component (A) is a mixture of two or more kinds, component (A) may be a mixture of a polyorganosiloxane having a high viscosity (for example, a viscosity of 10,000 to 25,000cP at 23°C) and a polyorganosiloxane having a low viscosity (for example, a viscosity of 100 to 5,000cP at 23°C).

The amount of component (A) contained in the composition of the present invention is usually 41 parts by weight or more based on 100 parts by weight of the whole composition, preferably 50 parts by weight or more. It is preferably 90 parts by weight or less based on 100 parts by weight of the whole composition, more preferably 70 parts by weight or less. The amount of component (A) means the total amount of two or more components (A) when they are used. When above-mentioned (a1) and (a2) are used together as components (A), the amount of (a1) is preferably 5 parts by weight or more, more preferably 10 parts by weight or more, based on 100 parts by weight of the whole composition. It is also preferably 30 parts by weight or less, more preferably 20 parts by weight or less, based on 100 parts by weight of the whole composition. The amount of (a2) is preferably 30 parts by weight or more, more preferably 40 parts by weight or more, based on 100 parts by weight of the whole composition. It is also preferably 70 parts by weight or less, more preferably 60 parts by weight or less, based on 100 parts by weight of the whole composition.

When (a1) and (a2) are used together as component (A), the blending ratio (mass ratio) of (a1) and (a2) can be affected by the amount of mercaptoalkyl group contained in component (B), but (a1): (a2) may be in the range of 10:90 to 90: 10, preferably in the range of 10:90 to 50:50, and more preferably in the range of 15:85 to 45:55. When the composition is produced, it is preferable to blend (a1) and (a2) in the ratio within the above range, but when (a2) is a mixture of multiple kinds of polyorganosiloxanes and contains a polyorganosiloxane having two or more aliphatic unsaturated groups as one component, the ratio including the content thereof may be within the above range.

### [(B) Polyorganosiloxane Containing Mercaptoalkyl Group]

The ultraviolet curable silicone gel composition contains (B) a polyorganosiloxane containing a mercaptoalkyl group bonded to a silicon atom.

In component (B), the number of mercaptoalkyl groups bonded to a silicon atom in one molecule can be 2 or more to 20 or less on average from the viewpoint of suppressing excessive curing shrinkage while securing a stable structure by crosslinking reaction. Among them, more than 2 to 10 or less are preferable, and more preferably 3 to 7.

In component (B), the alkyl portion of the mercaptoalkyl group bonded to a silicon atom can be a C1 to C6 alkyl group. Examples of the mercaptoalkyl group include mercaptomethyl, 2-mercaptoethyl, 3-mercaptopropyl, 4-mercaptobutyl, 6-mercaptohexyl, etc., and from the viewpoint of ease of synthesis, mercaptomethyl and 3-mercaptopropyl are preferred, and more preferably 3-mercaptopropyl.

In component (B), the organic group other than the mercaptoalkyl group attached to the silicon atom can be a substituted or unsubstituted monovalent hydrocarbon group (with the proviso that it is not an aliphatic unsaturated group). Specifically, alkyl groups such as C1 to C6 alkyl groups (for example, methyl, ethyl, propyl, etc.); cycloalkyl groups such as C3 to C10 cycloalkyl groups (for example, cyclohexyl and the like); aryl groups such as C6 to C12 aryl groups (for example, phenyl, tolyl, xylyl and the like); aralkyl groups such as C7 to C13 aralkyl groups (for example, 2-phenylethyl, 2-phenylpropyl and the like); substituted hydrocarbon groups such as halogen substituted hydrocarbon groups (for example, chloromethyl, chlorophenyl, 3,3,3-trifluoropropyl and the like) are included. Alkyl groups are preferable from the viewpoint of ease of synthesis and the like, among which methyl, ethyl and propyl are preferable, and methyl is more preferable. Aryl groups can be used together to adjust the refractive index, among which phenyl is preferable from the viewpoint of ease of synthesis and the like.

The structure of the main chain of (B) may be linear, branched or cyclic, and branched is preferable. Examples include branched polyorganosiloxanes containing mercaptoalkyl groups, which are composed of R"SiO_{3/2} units, R"₃SiO_{1/2} units, R"₂SiO_{2/2} units and optionally SiO_{4/2} units (in the formula, each R" independently represents an unsubstituted or substituted monovalent hydrocarbon group (with the proviso that is is not an aliphatic unsaturated group)), and in which 2 or more and 20 or less R" are mercaptoalkyl groups per one molecule. Examples of mercaptoalkyl groups and unsubstituted or substituted monovalent hydrocarbon groups include the above groups. The mercaptoalkyl R" may exist as any unit of R", but preferably exists as R" of R"SiO_{3/2} units. Examples of mercaptoalkyl groups and unsubstituted or substituted monovalent hydrocarbon groups include the above groups. From the viewpoint of workability and crosslinking reactivity, the ratio of the number of siloxane units containing mercaptoalkyl groups to that of siloxane units not containing mercaptoalkyl groups is preferably 1:60 to 1:8, more preferably 1:50 to 1:10.

The viscosity of (B) at 23°C is preferably 20 to 10,000cP. In view of workability and refractive index, the viscosity may be, for example, 30 to 8,000cP.

The number of mercapto groups contained in (B) can be determined by colorimetric titration with iodine. This is a method using a reaction represented by the following formula:

2RSH + I₂ → RSSR + 2HI

wherein a small amount of excess iodine causes the titrant to turn pale yellow during titration.

It is preferable that the transparency of (B) is high. A transmittance of 80% or more is cited as an index of the transparency of (B). For determining transparency of (B), (B) is filled in a container, and the transmittance of the 10 mm thickness is measured at a wavelength in the visible light region (360 to 780 nm) by a spectrophotometer at 23°C. The transmittance is preferably 90% or more from the viewpoint that the transparency of the cured product of the composition can be stably maintained.

The preparation method of (B) is not particularly limited, and can be produced by, for example, hydrolyzing, polycondensing, and re-equilibrating a mercaptoalkylalkoxysilane such as mercaptopropyltrimethoxysilane, mercaptopropyltriethoxysilane, mercaptopropylmethyldiethoxysilane, mercaptopropyldimethylmethoxysilane, or mercaptopropyldimethoxysilane with a desired alkylchlorosilane, alkylalkoxysilane, or silanol-containing siloxane.

(B) may be used alone or in combination of two or more kinds. The amount of component (B) contained in the composition of the present invention may be suitably set according to the amount of unsaturated groups contained in (A) and the amount of mercaptoalkyl groups contained in (B), and is not particularly limited. The amount is usually 0.1 parts by weight or more, and more preferably 0.4 parts by weight or more, based on 100 parts by weight of the whole composition. It is also preferably 3 parts by weight or less, and more preferably 2 parts by weight or less, based on 100 parts by weight of the whole composition. The amount of component (B) herein means the total amount of two or more components (B) when they are used.

Since the amount of (B) is affected by the amount of unsaturated groups in (A), it is preferable to use (B) in an amount such that the ratio of the number of mercaptoalkyl groups (HS) in (B) to the number of aliphatic unsaturated groups (Vi) in (A) (HS/Vi) is 0.01 to 10. From the viewpoint of curability and hardness of the cured product, the ratio is more preferably 0.01 to 5, more preferably 0.03 to 1, and particularly preferably 0.05 to 0.5.

### [(C) Photoreaction Initiator]

The ultraviolet curable silicone gel composition of the present invention contains, as component (C), a photoreaction initiator for initiating the reaction of (A) and (B). The component (C) is excited by receiving light and gives excitation energy to an unsaturated bond such as a (meth)acrylic group of polyorganosiloxane (A) to initiate a curing reaction by ultraviolet irradiation.

From the viewpoint of reactivity, the component (C) includes aromatic hydrocarbons, acetophenone and its derivatives, benzophenone and its derivatives, o-benzoylbenzoic acid esters, benzoin and benzoin ethers and their derivatives, xanthones and their derivatives, disulfide compounds, quinone compounds, halogenated hydrocarbons and amines, and organic peroxides. From the viewpoint of compatibility with silicone and chemical stability, compounds containing substituted or unsubstituted benzoyl groups or organic peroxides are more preferable.

As component (C), for example, acetophenone, propiophenone, 2-hydroxy-2-methylpropiophenone, 2,2-dimethoxy-1, 2-diphenylethane-1-one (IRGACURE 651, a product of BASF), 2-hydroxy-2-methyl-1-phenyl-propane-1-one (DAROCUR 1173, a product of BASF), 1-hydroxy-cyclohexyl-phenyl-ketone (IRGACURE 184, a product of BASF), 1-[4-(2-hydroxyethoxy)-phenyl]-2-hydroxy-2-methyl-1-propane-1-one (IRGACURE 2959, a product of BASF), 2-hydroxy-1-{4-[4-(2-hydroxy-2-methylpropionyl)-benzyl]phenyl}-2-methyl-propane-1-one (IRGACURE 127, a product of BASF), 2-methyl-1-(4-methylthiophenyl)-2-morpholinopropane-1-one (IRGACURE 907, a product of BASF), 2-benzyl-2-dimethylamino-(4-morpholinophenyl)-butanone-1 (IRGACURE 369, a product of BASF), 2-(dimethylamino)-2-[(4-methylphenyl) methyl]-1-[4-(4-morpholinyl) phenyl]-1-butanone (IRGACURE 379, a product of BASF); 2,4,6-Trimethylbenzoyl-diphenyl-phosphine oxide (LUCIRIN TPO, manufactured by BASF), bis(2,4,6-trimethylbenzoyl)-phenylphosphine oxide (IRGACURE 819, manufactured by BASF); 1,2-Octanedione, 1-[4-(phenylthio)phenyl-, 2-(O-benzoyloxime)] (IRGACURE OXE 01, manufactured by BASF), ethanone, 1-[9-ethyl-6-(2-methylbenzoyl)-9H-carbazole-3-yl]-, 1-(O-acetyloxime) (IRGACURE OXE 02, manufactured by BASF); a mixture of oxyphenylacetic acid, 2-[2-oxo-2-phenylacetoxyethoxy]ethyl ester and oxyphenylacetic acid, 2-(2-hydroxyethoxy)ethyl ester (IRGACURE 754, manufactured by BASF), phenylglyoxylic acid methyl ester (DAROCUR MBF, manufactured by BASF), ethyl-4-dimethylaminobenzoate (DAROCUR EDB, manufactured by BASF), 2-ethylhexyl-4-dimethylaminobenzoate (DAROCUR EHA, manufactured by BASF), bis(2,6-dimethoxybenzoyl)-2,4,4-trimethyl-pentylphosphine oxide (CGI 403, manufactured by BASF), benzoyl peroxide, cumene peroxide, and the like are cited.

In view of compatibility and photoreactivity, acetophenone, propiophenone, 2-hydroxy-2-methylpropiophenone, 2,2-dimethoxy-1,2-diphenylethane-1-one (IRGACURE 651, a product of BASF), 2-hydroxy-2-methyl-1-phenyl-propane-1-one (DAROCUR 1173, a product of BASF), 1-hydroxy-cyclohexyl-phenyl-ketone (IRGACURE 184, a product of BASF), 2-methyl-1-(4-methylthiophenyl)-2-morpholinopropane-1-one (IRGACURE 907, a product of BASF), 2-benzyl-2-dimethylamino-(4-morpholinophenyl)-butanone-1 (IRGACURE 369, a product of BASF), 2,4,6-trimethylbenzoyl-diphenyl-phosphine oxide (LUCIRIN TPO, a product of BASF), bis(2,4,6-trimethylbenzoyl)-phenylphosphine oxide (IRGACURE 819, a product of BASF) are preferred.

The component (C) may be used alone or in combination of two or more kinds. The amount of the component (C) contained in the composition of the present invention is not particularly limited as long as the amount of the component (C) allows the curing reaction to progress sufficiently, it is preferably 0.1 parts by weight or more, and more preferably 0.4 parts by weight or more, based on 100 parts by weight of the whole composition from the viewpoint of curability and optical properties after curing. It is also preferably 3 parts by weight or less, and more preferably 2 parts by weight or less, based on 100 parts by weight of the whole composition. The amount of the component (C) means the total amount of 2 or more kinds of the component (C) when they are used.

### [(D) Hindered Amine-Based Stabilizer]

The ultraviolet-curable silicone gel composition contains a hindered amine-based stabilizer as a component (D). The present invention is based on the finding that the use of the hindered amine-based stabilizer is particularly excellent in the long-term reliability of the ultraviolet-curable silicone gel composition, and that the use of the component (E) together with the component (D) improves the complex modulus G*, that is, improves the damping property, due to the control of the dispersion state of particles caused by the influence of the component (D) for the particle surface of component (E).

Examples of hindered amine-based antioxidants include, but are not limited to, N,N',N",N‴-tetrakis-(4,6-bis(butyl-(N-methyl-2,2,6,6-tetramethylpiperidine-4-yl) amino)-triazine-2-yl)-4,7-diazadecane-1,10 diamine, polycondensates of dibutylamine, 1,3,5-triazine, N,N'-bis-(2,2,6,6-tetramethyl-4-piperidyl-1,6-hexamethylenediamine, and N-(2,2,6,6-tetramethyl-4piperidyl)butylamine, poly [{6-(1,1,3,3-tetramethylbutyl) amino-1,3,5-triazine-2,4-diyl} {(2,2,6,6-tetramethyl-4-piperidyl)imino} hexamethylene {(2,2,6,6-tetramethyl-4-piperidyl)imino}], polymers of dimethyl succinate and 4-hydroxy-2,2,6,6-tetramethyl-1-piperidine ethanol, [reaction product of bis (2,2,6,6-tetramethyl-1-(octyloxy)-4-piperidyl)decanedioic acid ester, 1,1-dimethylethyl hydroperoxide and octane (70%)] -polypropylene (30%), bis(1,2,2,6,6-pentamethyl-4-piperidyl) [[3,5-bis(1,1-dimethylethyl)-4-hydroxyphenyl]methyl]butylmalonate, methyl 1,2,2,6,6-pentamethyl-4-piperidyl sebacate, bis(2,2,6,6-tetramethyl-4-piperidyl) sebacate, bis(1,2,2,6,6-pentamethyl-4-piperidyl) sebacate, 1-[2-[3-(3,5-di-tert-butyl-4-hydroxyphenyl)propionyloxy]ethyl]-4-[3-(3,5-di-tert-butyl-4-hydroxyphenyl)propionyloxy]-2,2,6,6-tetramethylpiperidine, 4-benzoyloxy-2,2,6,6-tetramethylpiperidine, 8-acetyl-3-dodecyl-7,7,9,9-tetramethyl-1,3,8-triazaspiro[4.5]decane-2,4-dione, and the like. It is particularly preferable to use bis (1-octyloxy-2,2,6,6-tetramethyl-4-piperidyl)sebacate (Tinuvin123) from the viewpoint of obtaining a more transparent composition.

Component (D) may be used alone or in combination of two or more kinds. The amount of component (D) contained in the composition of the present invention is not particularly limited as long as the amount enable to sufficiently proceed the curing reaction, but it is preferably 0.1 parts by weight or more, and more preferably 0.4 parts by weight or more, based on 100 parts by weight of the whole composition. It is preferably 3 parts by weight or less, and more preferably 2 parts by weight or less, based on 100 parts by weight of the whole composition. Here, the amount of component (D) means the total amount of two or more kinds of component (D) when they are used.

### [(E) Microparticles Containing Silicon-Oxygen Bonds]

The composition of the present invention contains microparticles containing silicon-oxygen bonds as a filler for controlling the fluidity of the composition and improving damping characteristics (hereinafter, it may be simply referred to as "silicon fine particles"). As the microparticles containing silicon-oxygen bonds, silica (silicon dioxide: SiO₂), silicone (silicon compound composed of -O-Si-O- bonds) and the like can be used as component (E). The microparticles containing silicon-oxygen bonds need only be prepared in the form of microparticles having the following average particle size, and may be microparticles having various shapes such as spherical, lumped, plate-like, pulverized, and the like, and are preferably spherical or pulverized. Examples of the microparticles containing silicon-oxygen bonds include spherical silicone resin, calcined silica, silica aerogel, precipitated silica, pulverized silica, and the like. Among these, it is preferable to use pulverized silica or spherical silicone resin microparticles from the viewpoint of the effect of improving the complex modulus of the cured product, and it is more preferable to use spherical silicone resin microparticles from the viewpoint of placing more importance on the damping characteristic upon curing.

The average particle size of the silicon microparticles ranges from 1 µm to 30 µm, with the lower limit of the average particle size being preferably 1.2 µm, more preferably 1.5 µm, more preferably 2 µm, and particularly preferably 4 µm. The upper limit of the average particle size is preferably 25 µm, more preferably 15 µm, more preferably 10 µm, and particularly preferably 6 µm. The average particle size can be determined by measuring D50, particularly by a method also known as Dynamic Light Scattering of a laser by a Malvern Zetasizer, photon correlation spectroscopy in accordance with ISO13320-1, or quasi-elastic light scattering. This method is a measuring and determining method, especially for uncured compositions, although in some cases it may be sufficient to determine the average particle size D50 by electron microscopy (TEM). By using silicon microparticles having particle sizes in the above range, the viscosity of the composition can be appropriately controlled while enhancing damping properties.

Silicon microparticles can be produced by methods known to those skilled in the art. A solid phase method such as ball milling or bead milling can be selected as a breakdown method for reducing the particle size, and a gas phase method such as CVD or sol-gel or a liquid phase method can be selected as a buildup method for obtaining particles from the molecular level by using a chemical reaction or the like, depending on the shape of the particles. The silicon microparticles may be commercially available or treated with a known surface treatment agent. As used herein, the surface treatment refers to the treatment of a functional group such as a silanol group existing on the surface of the particles by making covalent bond with a compound having reactivity with the functional group. As a surface treatment method, a treatment with a silazane compound (hexamethyldisilazane, 1,3-divinyl-1,1,3,3-tetramethyldisilazane, 1,3-bis(chloromethyl)tetramethyldisilazane, 1,3-bis(3,3,3-trifluoropropyl)-1,1,3,3-tetramethyldisilazane, 1,3-diphenyltetramethyldisilazane, heptamethyldisilazane, 2,2,4,4,6,6-hexamethylcyclotrisilazane, octamethylcyclotetrasilazane, 1,1,3,3-tetramethyldisilazane, 2,4,6-trimethyl-2,4,6-trivinylcyclotrisilazane and the like), an alkoxysilane compound (methyltrimethoxysilane, dimethyldimethoxysilane, methyltriethoxysilane, dimethyldiethoxysilane, n-propyltrimethoxysilane, n-propyltriethoxysilane, phenyltrimethoxysilane, phenyltriethoxysilane, hexyltrimethoxysilane, hexyltriethoxysilane, octyltrimethoxysilane, octyltriethoxysilane, decyltrimethoxysilane, hexadecyltrimethoxysilane and the like), a chlorosilane compound (methyltrichlorosilane, dimethyldichlorosilane, trimethylchlorosilane, etc.), octamethylcyclotetrasiloxane, a dimethylsiloxane oligomer or the like can be mentioned. Among these, a chemical treatment with a silazane compound or a chlorosilane compound is preferable because the silica surface can be hydrophobically treated with a small amount of treatment. Particularly, hexamethyldisilazane and dimethyldichlorosilane are preferable. Hexamethyldisilazane is preferable from the viewpoint of the degree of treatment and the stability (degree of inactivation) of the surface state after treatment. These surface-treating agents may be mixed together with silica at the time of preparation of the curable composition and kneaded to carry out the surface treatment of the particles.

The component (E) may be used alone or in combination of two or more components. The amount of the component (E) contained in the composition of the present invention is not particularly limited as long as the amount can impart a certain viscoelasticity to the composition, it is preferably 0.1 parts by weight or more, more preferably 0.4 parts by weight or more, and more preferably 10 parts by weight or more based on 100 parts by weight of the whole composition. It is also preferably 40 parts by weight or less, and more preferably 35 parts by weight or less based on 100 parts by weight of the whole composition. Within this range, a composition excellent in strength and long-term reliability can be obtained, but from the viewpoint of placing more importance on the long-term reliability of the composition, the amount of the component (E) is preferably controlled and preferably 25 parts by weight or less. From the viewpoint of giving more importance to the strength against deformation of the composition, the amount of component (E) is preferably large and preferably 25 parts by weight or more. The amount of component (E) means the total amount of two or more components (E) when they are used.

### [Ultraviolet-Curable Silicone Gel Composition]

The ultraviolet-curable silicone gel composition of the present invention contains the above components (A) to (E). The properties of the polyorganosiloxane composition of the present invention are not particularly limited as long as the components are uniformly mixed and have a degree of fluidity that allows the composition to be applied to a substrate. Since the silicone gel composition of the present invention has high stability, it is possible to maintain the properties related to hardness such as the elastic modulus at a high level for a long period of time after curing.

The ultraviolet-curable silicone gel composition may be a one-component composition in which the components are all mixed, or a two-component composition in which the components (B) and (C) are separately blended. The composition of the one-component type or the two-component type can be appropriately selected in consideration of workability, curing conditions, and the like, and the method is known to those skilled in the art.

The ultraviolet-curable silicone gel composition of the present invention may contain other known components as long as they do not impair the purpose and effect thereof. As additives, additives such as a silane coupling agent, a reaction inhibitor, and an inorganic filler may be contained. In addition, siloxane resins not corresponding to the above components (A) and (B) may be incorporated. Examples of such resins include polyorganosiloxane having no curable functional group such as dimethylsiloxane. These resins can be used as diluents.

Examples of the silane coupling agent include 3-methacryloxypropyltriethoxysilane, 3-methacryloxypropyltrimethoxysilane, vinyltrimethoxysilane, vinyltriethoxysilane, 3-aminopropyltriethoxysilane, 3-aminopropyltrimethoxysilane, 3-mercaptopropyltriethoxysilane, 3-mercaptopropyltrimethoxysilane, 3-glycidoxypropyltrimethoxysilane, 3-glycidoxypropyltriethoxysilane, trimethoxysilylpropyldiallyl isocyanurate, bis (trimethoxysilylpropyl) allyl isocyanurate, tris (trimethoxysilylpropyl) isocyanurate, triethoxysilylpropyldiallyl isocyanurate, bis (triethoxysilylpropyl) allyl isocyanurate, tris (triethoxysilylpropyl) isocyanurate, and preferably 3-methacryloxypropyltriethoxysilane and 3-methacryloxypropyltrimethoxysilane.

Examples of the reaction inhibitor include hydroquinone, p-methoxyphenol, p-t-butylcatechol, phenothiazine and the like.

Inorganic fillers include reinforcing fillers such as fumed titanium oxide; oxides such as fumed silica, diatomite, iron oxide, zinc oxide, titanium oxide, aluminum oxide; carbonates such as calcium carbonate, magnesium carbonate, zinc carbonate; silicates such as aluminosilicate, calcium silicate, mica; talc; conductive fillers such as carbon black, copper powder, nickel powder; the surfaces of which are treated with a hydrophobizing agent. Among these, the inorganic filler is preferably fumed silica, carbon black or calcium carbonate, and more preferably fumed silica. A preferred embodiment of the present invention is an ultraviolet-curable silicone gel composition further containing fumed silica as component (F). The fumed silica is silica having a particle diameter of about 10 nm and does not fall under the above (E). The fumed silica has an effect of increasing viscosity and can be used within a range that does not impair workability in preparing the composition of the present invention.

The component (F) preferably has a BET specific surface area of 50 m²/g or more, more preferably 50 to 300 m²/g.

When the fumed silica is used as the inorganic filler, surface-treated fumed silica is particularly preferable. By using the surface-treated silica, fluidity of the composition can be suppressed and mechanical strength can be imparted to the cured product of the composition. The surface treatment method may be the same as that for silicon fine particles.

The amount of the inorganic filler is preferably 1 part by weight or more based on 100 parts by weight of the whole composition, and more preferably 3 parts by weight or more. Further, it is preferably 10 parts by weight or less based on 100 parts by weight of the whole composition, and more preferably 7 parts by weight or less.

The curable polyorganosiloxane composition may further contain a siloxane resin not corresponding to the above component (A) or (B). Such a resin can also be used as a diluent for adjusting the viscosity. Examples of such a siloxane resin include resins obtained by the combination of the above M, D, T, and Q units, which do not have curable functional groups, and in particular, a siloxane having no curable functional group represented by the following formula:

R₃Si-O-(SiR₂O)ₙ-SiR₃

(wherein, R is a C₁₋₆ alkyl group or a C₆₋₁₂ aryl group, and n is a number where the viscosity at 23°C. is 100 to 100,000cP.)
can be used. By using such a siloxane resin, it is possible to control the hardness of the curable polyorganosiloxane composition when it is cured, and to control the viscosity of the composition, so that the composition can widely meet the requirements for handleability and required physical properties.

From the viewpoint of workability, the composition preferably has a viscosity at 23°C of 100 to 50,000cP, more preferably 100 to 20,000cP, and more preferably 500 to 13,000cP.

The composition can be obtained by blending (A) to (E) and optional components. In preparing the composition, since the components (A) to (E) are excellent in compatibility, by mixing all of the components (A) to (E), the composition can easily be made uniform and a transparent cured product can be obtained. The optional components can be added as appropriate, especially when an inorganic filler such as fumed silica is used as component (F), it is preferable to mix component (A) and the inorganic filler in a dispersed state and then to mix them with other components.

The composition can be cured by irradiation with ultraviolet rays. The irradiation intensity of the ultraviolet rays is preferably 10 to 10,000 mW/cm², more preferably 30 to 6,000 mW/cm², and more preferably 50 to 4,000 mW/cm². The irradiation time of the ultraviolet rays also depends on the intensity of the ultraviolet rays, but is preferably 10 to 100 seconds, more preferably 15 to 80 seconds, and more preferably 20 to 70 seconds. It is preferable that the composition is prepared so that the composition is cured by irradiation with the intensity of 100 mW/cm² for 30 seconds. Here, the "cured" state means a state in which the characteristics remain constant even when the ultraviolet rays are continuously irradiated. The irradiation amount is a measured value of UVA, and UVA refers to ultraviolet rays in the range of 315 to 400 nm.

The composition has good curability when irradiated with the wavelength of ultraviolet rays, for example, ultraviolet rays in the range of 250 to 450 nm. Examples of light sources that emit ultraviolet rays of such wavelengths include, for example, a high-pressure mercury lamp (UV-7000) and a metal halide lamp (UVL-4001M3-N1) manufactured by USHIO ELECTRIC CO., LTD., a metal halide lamp (JM-MTL 2KW) manufactured by JM tech Co., Ltd. in Korea, an ultraviolet irradiation lamp (OSBL360) manufactured by Mitsubishi Electric Co., Ltd., an ultraviolet irradiation machine (UD-20-2) manufactured by Nippon Battery Co., Ltd., and a fluorescent lamp (FL-20BLB) manufactured by Toshiba Corporation, and an H valve, an H plus valve, a V valve, a D valve, a Q valve, and an M valve manufactured by Heraeus Co., Ltd.

Since the composition of the present invention has a high complex modulus G*, it can be used as a damping material for an apparatus such as an image display device. The damping material may be interposed at a desired position, for example, between the image display portion and the protective portion, and cured by irradiation with ultraviolet light to seal the image display portion and the protective portion. The larger the value of G*, the better the characteristics as the damping material, but in the composition of the present invention, it is preferable that the value of G* in the initial state and the state after the acceleration test under the conditions described below is 3,000 Pa or more, and more preferably that the value of G* is 4,000 Pa or more. Alternatively, it is preferable that the value of G* after the acceleration test is within ±35% of the value of G* before the acceleration test is 100%. The method of measuring G* is a method of recording data of G* at a frequency of 10 Hz using a rheometer.

The composition of the present invention has high stability. The stability can be evaluated by a change in the value of the loss tangent (tanδ) in addition to the complex modulus G*. The loss tangent is a measure for the contribution of elasticity and viscosity in a viscoelastic substance such as the composition of the present invention, and the smaller the value, the stronger the property as an elastic substance, and the larger the value, the stronger the property as a viscous substance. Since a large change in the value of the loss tangent (Δtanδ) means that the property of the composition as a viscoelastic substance changes, the value of Δtanδ is preferably small, and the amount of change before and after the acceleration test under the conditions described later is preferably 0.5 or less. The method for measuring tanδ is a method for recording the data of tanδ (tan delta) at a frequency of 10 Hz using a rheometer.

The composition of the present invention has long-term stability as a damping material, and can be suitably used for a member easily damaged by environment such as moisture, temperature, and ultraviolet rays. Therefore, it is preferable that the composition of the present invention can suppress changes in the complex modulus G* and tanδ, which are evaluation criteria as a damping material, even when exposed to high temperature and high humidity for a long period of time. For evaluation of long-term stability, it is preferable that the complex modulus G* and tanδ remain at the above values or change amounts before and after being placed in an environment of 85°C. and 85% relative humidity for 125 hours.

The composition of the present invention can be suitably used in the manufacture of an image display device which is expected to be used in the field and requires good UVA resistance, and is particularly preferable as a damping material for a camera as a resin interposed between a protective portion and an image display portion.

### EXAMPLES

Hereinafter, the present invention will be described in more detail with reference to Examples and Comparative Examples. The present invention is not limited by these Examples.

Materials used in Examples and Comparative Examples are as follows.
<(A) Polyorganosiloxane containing an aliphatic unsaturated group>
   (a1) α,ω-divinylpolyphenylmethylsiloxane having a viscosity of 20,000cP at 23°C. (5 mol% phenyl)
   (a2) Linear flake vinylpolyphenylmethylsiloxane having a viscosity of 2,500cP at 23°C. (5 mol% phenyl)
<(B) Polyorganosiloxane containing a mercaptoalkyl group>
   Polyorganosiloxane containing a mercaptoalkyl group having a viscosity of 200cP at 23°C
<(C) Photoreaction initiator>
   (1) 2-Hydroxy-2-methyl-1-phenyl-propane-1-one (DAROCUR 1173, manufactured by BASF)
   (2) 1-Hydroxy-cyclohexyl-phenyl-ketone (IRGACURE 184, manufactured by BASF)
<(D) Hindered amine stabilizer>
   bis(1-octyloxy-2,2,6,6-tetramethyl-4 piperidyl)sebacate (Tinuvin123)
<(E) Microparticles containing silicon-oxygen bonds>
   (1) Spherical silicone resin microparticles (particle size 2 µm/TOSPARL (registered) 120 manufactured by Momentive Performance Materials, Inc.)
   (2) Spherical silicone resin microparticles (particle size 2 µm/TOSPARL (registered) 120FL manufactured by Momentive Performance Materials, Inc.)
   (3) Spherical silicone resin microparticles (particle size 4.5 µm/TOSPARL (registered) 145 manufactured by Momentive Performance Materials, Inc.)
   (4) Spherical silicone resin microparticles (particle size 6 µm/TOSPARL (registered) 3000 A manufactured by Momentive Performance Materials, Inc.)
   (5) Spherical silicone resin microparticles (particle size 10 µm/TOSPARL (registered) 1100 manufactured by Momentive Performance Materials, Inc.)
   (6) Spherical silica (particle size 0.3 µm/SO-C1 manufactured by Admatex, Inc.)
   (7) Spherical silica (particle size 1.2 µm/SO-C4 manufactured by Admatex, Inc.)
   (8) Spherical silica (particle size 1.9 µm/SO-C6 manufactured by Admatex, Inc)
   (9) Milled silica (particle size 1.4 µm/Crystalite (registered) 5X)
   (10) Milled silica (particle size 4 µm/Crystalite (registered) VX-S)

Fumed silica (primary particle size 7 nm/RheoSeal (registered) HM-30S) is used as an additional additive, and p-t-butylcatechol is used as a reaction inhibitor.

### Example 1 to 13, Comparative Example 1 to 13

### <Preparation of Ultraviolet-Curable Silicone Gel Composition>

Component (C) is handled in a yellow room to prevent radical generation of the initiator by ultraviolet light. Components (A) to (E), fumed silica and a reaction inhibitor are kneaded in a planetary mixer by a predetermined method in the blending amounts (parts by mass) shown in Tables 1 and 2 below to obtain an ultraviolet-curable silicone gel composition. Component (E) is not added in Comparative Examples 1 and 2, and component (D) is not added in Comparative Examples other than Comparative Examples 1 and 3.

Each UV-curable silicone gel composition is cured by irradiating both surfaces of the gel sheet with an integrated light dose of 3000 mJ/cm² (irradiation with ultraviolet light at 100 mW/cm² for 30 seconds) to obtain a cured product.

### <Measurement of complex viscoelasticity G*>

The G* at 25°C and 10 Hz of the gel sheet of 2 mm thickness is measured by a rheometer. After measuring G* in the initial state, the cured product of each UV-curable silicone gel composition is allowed to stand for 125 hours in an environment of 85°C and 85% relative humidity, and an acceleration test was performed. After standing, G* was measured again. When at least one of the following is satisfied: the value of G* after the acceleration test is 4,000 Pa or more, and the rate of change before and after the acceleration test is within ±35%, the product was evaluated as excellent. The results are shown in Tables 1 and 2.

### <Measurement of tanδ >

Tanδ at 25°C. and 10 Hz of the gel sheet of 2 mm thickness is measured by a rheometer. After measuring tanδ in the initial state, the cured products of each UV-curable silicone gel composition are allowed to stand for 125 hours in an environment of 85°C and 85% relative humidity, and an acceleration test is performed. After standing, tanδ is measured again. When the difference in tanδ between before and after the acceleration test is within ±0.50, it is evaluated that there is no significant change in the viscoelastic properties of the UV-curable silicone gel composition. The results are shown in Tables 1 and 2.

### [Table 1]

**Table 1**

| | | Example 1 | Example 2 | Example 3 | Example 4 | Example 5 | Example 6 | Example 7 | Example 8 | Example 9 | Example 1 0 | Example 11 | Example 1 2 | Example 1 3 |
|---|---|---|---|---|---|---|---|---|---|---|---|---|---|---|
| (A) | Monovinylpolysiloxane (visocity 2.5Pas) | 46.68 | 46.68 | 46.68 | 46.68 | 46.68 | 46.68 | 46.68 | 46.68 | 46.68 | 46.68 | 46.68 | 46.68 | 46.08 |
| | Divinylpolysioxane (viscosity 20.5Pas) | 15.69 | 15.69 | 15.69 | 15.69 | 15.69 | 15.69 | 15.69 | 15.69 | 15.69 | 15.69 | 15.69 | 15.69 | 15.49 |
| (B) | Mercapto-group containing polysiloxane (viscosity 0.18Pas) | 1.56 | 1.56 | 1.56 | 1.56 | 1.56 | 1.56 | 1.56 | 1.56 | 1.56 | 1.56 | 1.56 | 1.56 | 1.54 |
| (C) | Irgacure1173 | 0.82 | 0.82 | 0.82 | 0.82 | 0.82 | 0.82 | 0.82 | 0.82 | 0.82 | 0.82 | 0.82 | 0.82 | 0.81 |
| | Irgacure184 | 0.82 | 0.82 | 0.82 | 0.82 | 0.82 | 0.82 | 0.82 | 0.82 | 0.82 | 0.82 | 0.82 | 0.82 | 0.81 |
| (D) | TINUVIN 123 | 1.00 | 1.00 | 1.00 | 1.00 | 0.93 | 0.81 | 0.81 | 0.81 | 0.81 | 0.81 | 0.81 | 0.81 | 0.81 |
| | Spherical silica (0.3*µ*m) | | | | | | | | | | | | | |
| | Spherical silica (1.2*µ*m) | | | | | | 30.00 | | | | | | | |
| | Spherical silica (1.9*µ*m) | | | | | | | 30.00 | | | | | | |
| | Spherical silicone microparticle (2 *µ*m) | 11.53 | | | | 23.00 | | | 30.00 | | | | | |
| (E) | Spherical silicone microparticle(2*µ*m,filtered) | | 11.53 | | | | | | | 30.00 | | | | |
| | Spherical silicone microparticle (4.5*µ*m) | | | 11.53 | | | | | | | 30.00 | | | |
| | Spherical silicone microparticle (6 *µ*m) | | | | | | | | | | | 30.00 | | |
| | Spherical silicone microparticle (10 µm) | | | | 11.53 | | | | | | | | 30.00 | |
| | Milled silica (1.4 *µ*m) | | | | | | | | | | | | | |
| | Milled silica (4 *µ*m) | | | | | | | | | | | | | 30.00 |
| Others | Fumed silica | 4.38 | 4.38 | 4.38 | 4.38 | 4.38 | 4.38 | 4.38 | 4.38 | 4.38 | 4.38 | 4.38 | 4.38 | 4.32 |
| | p-t-butyl catecol | 0.04 | 0.04 | 0.04 | 0.04 | 0.04 | 0.04 | 0.04 | 0.04 | 0.04 | 0.04 | 0.04 | 0.04 | 0.04 |
| Initial State | Viscosity (cP) | 5900 | 5896 | 5879 | 5762 | 8400 | 7767 | 7209 | 10555 | 10808 | 10688 | 10555 | 11221 | 7395 |
| | G* (Pa) | 3300 | 4400 | 4500 | 4000 | 4400 | 5684 | 4441 | 8681 | 8698 | 8541 | 8118 | 7953 | 5264.5 |
| | Tan *δ* | 1.84 | 1.68 | 1.73 | 1.7 | 1.83 | 1.46 | 1.36 | 1.77 | 1.74 | 1.79 | 1.76 | 1.76 | 1.43 |
| Acceleration test | G* (Pa) | 3300 | 3800 | 4000 | 4300 | 4400 | 4232.8 | 3763.7 | 6135.4 | 5739.8 | 6252.6 | 6800.6 | 5835.5 | 5366.4 |
| | Tan *δ* | 1.89 | 2.11 | 1.91 | 1.72 | 1.86 | 1.82 | 1.69 | 1.73 | 1.79 | 1.74 | 1.62 | 1.8 | 1.48 |
| | **Gap G*** | **0** | **-600** | **-500** | **300** | **0** | **-1450.8** | **-676.8** | **-2545.6** | **-2958.2** | **-2288.4** | **-1317.4** | **-2117.5** | **101.9** |
| | **Gap Tan *δ*** | **0.05** | **0.43** | **0.18** | **0.02** | **0.03** | **0.36** | **0.33** | **-0.04** | **0.05** | **-0.05** | **-0.14** | **0.04** | **0.05** |

### [Table 2]

**Table 2**

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 |
|---|---|---|---|---|---|---|---|---|---|---|---|---|---|---|
| (A) | Monovinylpolysiloxane (visocity 2.5Pas) | 66.02 | 66.68 | 46.68 | 46.68 | 46.68 | 46.68 | 46.68 | 46.68 | 46.68 | 46.68 | 46.68 | 46.68 | 46.68 |
| | Divinylpolysioxane (viscosity 20.5Pas) | 22.19 | 22.41 | 15.69 | 15.69 | 15.69 | 15.69 | 15.69 | 15.69 | 15.69 | 15.69 | 15.69 | 15.69 | 15.69 |
| (B) | Mercapto-group containing polysiloxane (viscosity 0.18Pas) | 2.21 | 2.24 | 1.56 | 1.56 | 1.56 | 1.56 | 1.56 | 1.56 | 1.56 | 1.56 | 1.56 | 1.56 | 1.56 |
| (C) | Irgacure1173 | 1.16 | 1.18 | 0.82 | 0.82 | 0.82 | 0.82 | 0.82 | 0.82 | 0.82 | 0.82 | 0.82 | 0.82 | 0.82 |
| | Irgacure184 | 1.16 | 1.18 | 0.82 | 0.82 | 0.82 | 0.82 | 0.82 | 0.82 | 0.82 | 0.82 | 0.82 | 0.82 | 0.82 |
| (D) | TINUVIN 123 | 0.99 | | 0.81 | | | | | | | | | | |
| | Spherical silica (0.3*µ*m) | | | 30.00 | 30.00 | | | | | | | | | |
| | Spherical silica (1.2*µ*m) | | | | | 30.00 | | | | | | | | |
| | Spherical silica (1.9*µ*m) | | | | | | 30.00 | | | | | | | |
| | Spherical silicone microparticle (2*µ*m) | | | | | | | 30.00 | | | | | | |
| (E) | Spherical silicone microparticle(2 *µ*m,filtered) | | | | | | | | 30.00 | | | | | |
| | Spherical silicone microparticle (4.5*µ*m) | | | | | | | | | 30.00 | | | | |
| | Spherical silicone microparticle (6*µ*m) | | | | | | | | | | 30.00 | | | |
| | Spherical silicone microparticle (10µm) | | | | | | | | | | | 30.00 | | |
| | Milled silica (1.4*µ*m) | | | | | | | | | | | | 30.00 | |
| | Milled silica (4*µ*m) | | | | | | | | | | | | | 30.00 |
| Others | Fumed silica | 6.20 | 6.26 | 4.38 | 4.38 | 4.38 | 4.38 | 4.38 | 4.38 | 4.38 | 4.38 | 4.38 | 4.38 | 4.38 |
| | p-t-butyl catecol | 0.06 | 0.06 | 0.04 | 0.04 | 0.04 | 0.04 | 0.04 | 0.04 | 0.04 | 0.04 | 0.04 | 0.04 | 0.04 |
| Initial State | Viscosity (cP) | 3800 | 3790 | 14900 Thixotropic, Non-liquidity | 14600 Thixotropic, Non-liquidity | 7736 | 7209 | 9897 | 9881 | 10195 | 10181 | 10650 Thixotropic, Non-liquidity | 10549 | 7548 |
| | G* (Pa) | 2627.3 | 2627.3 | 17122 | 21419 | 4636 | 4508 | 6399.1 | 6693 | 6541 | 6229 | 6137.3 | 9979.5 | 4991.2 |
| | Tan *δ* | 1.51 | 1.51 | 1.13 | 0.799 | 1.64 | 1.47 | 1.52 | 1.52 | 1.43 | 1.53 | 1.55 | 1.15 | 1.4 |
| Acceleration test | G* (Pa) | 2711.4 | 2063 | 52506 | 46411 | 2764.5 | 2906.7 | 4142.4 | 4146.6 | 4863.6 | 4244.5 | 3375.9 | 16158 | 2897.5 |
| | Tan *δ* | 1.69 | 2.25 | 0.632 | 0.637 | 2.65 | 2.31 | 2.17 | 2.19 | 1.96 | 2.16 | 2.56 | 0.829 | 2.26 |
| | **Gap G*** | **84.1** | **-564.3** | **35384** | **24992** | **-1871.7** | **-1601.4** | **-2256.7** | **-2546.4** | **-1677.4** | **-1984.5** | **-2761.4** | **6178.5** | **-2093.7** |
| | **Gap Tan *δ*** | **0.18** | **0.74** | **-0.498** | **-0.162** | **1.01** | **0.84** | **0.65** | **0.67** | **0.53** | **0.63** | **1.01** | **-0.321** | **0.86** |

Tables 1 and 2 show that the complex modulus G* of the composition is improved by adding fine particles having a specific particle size and containing silicon-oxygen bonds. The ultraviolet-curable silicone gel compositions of the Examples have a high complex modulus G* and are excellent in overall resistance to deformation. The addition of more silicon fine particles increases G* (Examples 1, 5 and 8). On the other hand, it appears that the numerical decrease with the passage of time increases as the amount of silicon fine particles increases. However, in all Examples, the decrease rate is smaller than that in the comparative example using the same silicon fine particles, and the numerical value is maintained so that the performance as a material such as a damping material can be sufficiently demonstrated. On the other hand, when the particle size of the silicon fine particles is too small, the flowability of the composition is impaired (Comparative Examples 3 and 4), resulting in a problem in handling as a damping material. In addition, it is shown that the addition of the hindered amine stabilizer decreases the amount of change in tanδ, especially with the passage of time. Even under the condition of the accelerated test, the amount of change in tanδ is small, which means that the characteristics as a viscous body or an elastic body are not greatly changed. Therefore, the ultraviolet curable silicone gel composition of the Examples can maintain reliability against physical force, vibration, and the like for a long period of time.

### Industrial Applicability

Disclosed is an ultraviolet-curable silicone gel composition which gives a cured product having excellent long-term reliability. The composition can maintain characteristics relating to hardness such as elastic modulus at a high level for a long period of time, and can be suitably used for members which are susceptible to environmental damage such as moisture, temperature and ultraviolet rays. For example, in the manufacture of an image display device which is expected to be used in the field and requires good UVA resistance, the silicone gel composition is suitable as a damping material for sealing between a protective part and an image display part.

## Claims

1. An ultraviolet curable silicone gel composition comprises:
(A) polyorganosiloxane containing an aliphatic unsaturated group;
(B) polyorganosiloxane containing a mercaptoalkyl group bonded to a silicon atom;
(C) photoreaction initiator initiating the reaction of (A) and (B)
(D) hindered amine stabilizer; and
(E) fine particles containing silicon-oxygen bonds having an average particle size of 1 to 30 µm.

2. The ultraviolet curable silicone gel composition according to claim 1, wherein the (A) is a polyorganosiloxane in which 1 to 10 mol% of the groups other than aliphatic unsaturated groups that directly bond to silicon are C6 to C12 aryl groups.

3. The ultraviolet curable silicone gel composition according to claim 1, wherein the (A) comprises: (a1) a linear polyorganosiloxane having at least two aliphatic unsaturated groups in the molecule; and (a2) a linear polyorganosiloxane having an average of one aliphatic unsaturated group in the molecule.

4. The ultraviolet-curable silicone gel composition according to claim 3, wherein the (a1) comprises a linear polyorganosiloxane containing an aliphatic unsaturated group represented by following formula (I): 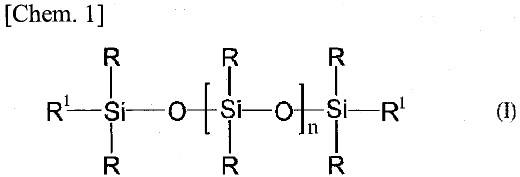 (wherein
each R¹ is independently an aliphatic unsaturated group;
each R is independently a C1 to C6 alkyl group or a C6 to C12 aryl group; and n is a number that makes a viscosity at 23°C 100 to 100,000cP.)

5. The UV-curable silicone gel composition according to claim 1, wherein the ratio of the number of mercaptoalkyl groups in (B) to the aliphatic unsaturated groups in (A) is 0.01 to 10.

6. The UV-curable silicone gel composition according to claim 1, wherein the (E) is spherical or pulverized fine particles.

7. The UV-curable silicone gel composition according to claim 1, wherein the (E) is fine particles derived from silicone or silicon dioxide.

8. The UV-curable silicone gel composition according to claim 1, wherein the amount of the (E) is 0.1 to 40 parts by weight based on a total of 100 parts by weight of the whole composition.

9. The ultraviolet curable silicone gel composition according to claim 1, further comprising (F) fumed silica.

10. The ultraviolet curable silicone gel composition according to claim 9, wherein, in the total of 100 parts by weight of (A) to (F), the amount of (A) is 41 to 90 parts by weight, the amount of (B) is 0.1 to 3 parts by weight, the amount of (C) is 0.1 to 3 parts by weight, the amount of (D) is 0.1 to 3 parts by weight, the amount of (E) is 0.1 to 40 parts by weight, and the amount of (F) is 1 to 10 parts by weight.

11. The ultraviolet curable silicone gel composition according to claim 1, wherein the value of the complex modulus G* when cured by irradiation with ultraviolet light having a wavelength of 315 to 400 nm at an intensity of 100 mW/cm² for 30 seconds is 4000 Pa or more.

12. A damping material comprising the ultraviolet curable silicone gel composition according to any one of claim 1 to 11.
